# EUROPEAN PATENT APPLICATION

(11) **EP 1 383 229 A1**
(43) Date of publication of application: **21.01.2004**
(21) Application number: 03254530.3
(22) Date of filing: 17.07.2003
(51) Int. Cl.: H02K 11/00, H02K 9/19, F04D 13/06

(54) **Electric motor including a heating system**

(30) Priority: 17.07.2002 GB 0216713
(71) Applicant: Goodrich Control Systems Limited, Luton, Bedfordshire LU1 3LU (GB)
(72) Inventor: Sangha, Parminder Singh, Solihull West Midlands B90 4HW (GB)
(74) Representative: Carpenter, David

(57) **Abstract**

An electric motor arranged for passing therethrough a supply of fluid for lubricating and/or cooling said motor, the motor (10) being provided with heating means (22) for heating the fluid when the fluid enters the motor.

## Description

### Technical Field

The present invention relates to a motor lubricant/coolant heating system and particularly, but not exclusively, to a system for heating, in low temperature environments, fluid used for lubricating and/or cooling a motor or the like. The invention finds particular application in heating the hydraulic fluid used in electro-hydraulic actuators to lubricate and/or cool the electric motor which drives the hydraulic pump.

Aircraft often employ electro-hydraulic actuators as control systems for the primary flight control surfaces of the aircraft, for example the ailerons, spoilers, elevators and rudder. Such electro-hydraulic actuators generally include an actuator for moving the flight control surfaces under the control of an hydraulic pump. Conventionally, the hydraulic pump is driven by an electric motor to which it is directly mounted.

### Background Art

It is known to use the hydraulic fluid from the pump as a lubricant and coolant for the electric motor in use. Specifically, the hydraulic fluid from the pump is allowed to flow into the motor and through the air gap between the rotor and the stator of the motor. The fluid exits the motor at the end remote from the hydraulic pump and is directed back into the hydraulic system. The fluid flowing through the motor lubricates the motor bearings and provides a cooling effect on the motor itself to dissipate heat generated during operation of the motor.

Typically, the hydraulic fluid which is used is highly corrosive, for example Type 4 phosphate ester, and may be under high pressure. It is therefore necessary to isolate the stator windings from the fluid. A sleeve is therefore provided in the air gap which lines the stator bore and isolates the coil windings from the hydraulic fluid.

The motor is required to operate over a temperature range of between approximately -55°C and 120°C. As the temperature of the hydraulic fluid decreases, its viscosity increases such that at the lower end of the operating temperature range, the viscosity of the hydraulic fluid can impede or prevent the motor from starting. Clearly, this can be a problem where the electro-hydraulic actuator is used on aircraft intended to operate in regions having an extremely cold climate and can be highly dangerous if the motor fails to start whilst the aircraft is in flight at an altitude where the temperature is extremely low.

US 4, 922, 119 discloses a starting system for an aircraft propulsion engine. An electric motor is mounted within a case which contains hydraulic fluid used by first and second hydraulic units as part of a constant speed drive transmission. The electric motor provides some heating for the hydraulic fluid but this heating exists only after power up of the motor and is therefore of no assistance in starting the motor itself.

It would be advantageous to provide a method and/or apparatus which addresses the problem of starting the electric motor at very low temperatures.

### Disclosure of the Invention

According to one aspect of the present invention, therefore, there is provided an electric motor arranged for passing therethrough a supply of fluid for cooling and/or lubricating said motor, the motor being provided with heating means for heating the fluid when the fluid enters the motor.

Advantageously, the motor is arranged such that the fluid flows through an annular gap between the rotor and the stator of the motor.

Conveniently, means are provided for isolating the stator windings from the fluid.

Preferably, the heating means is arranged, in use, to raise the temperature of the fluid above -50°C. More preferably, the heating means is arranged, in use, to raise the temperature of the fluid to a value no less than -40°C.

Preferably a temperature sensing arrangement, conveniently a thermostatic switch, is used in association with the heating means.

Advantageously, the heating means is arranged such that it is not in contact with the fluid.

Preferably, the heating means comprises an annular heating element.

The heating element may be mounted to the motor radially outwardly or behind the motor bearings.

Preferably, the heating element is mounted close to or adjacent to a region of the motor at which the fluid enters the motor. More preferably, the heating element is mounted to the bearing block of the motor.

Conveniently the heating element is spring urged into contact with the motor structure

The motor may be associated with an hydraulic pump and the fluid may comprise hydraulic fluid supplied by said hydraulic pump.

In one embodiment, the motor is used to drive an hydraulic pump forming part of an electro-hydraulic actuator.

### Brief Description of the Drawings

The present invention will now be described, by way of example only, with reference to the accompanying drawings wherein;
Figure 1 illustrates a section through a preferred form of motor according to the invention, and,
Figure 2 is a enlarged cross-sectional view of a modification of the motor of Figure 1.

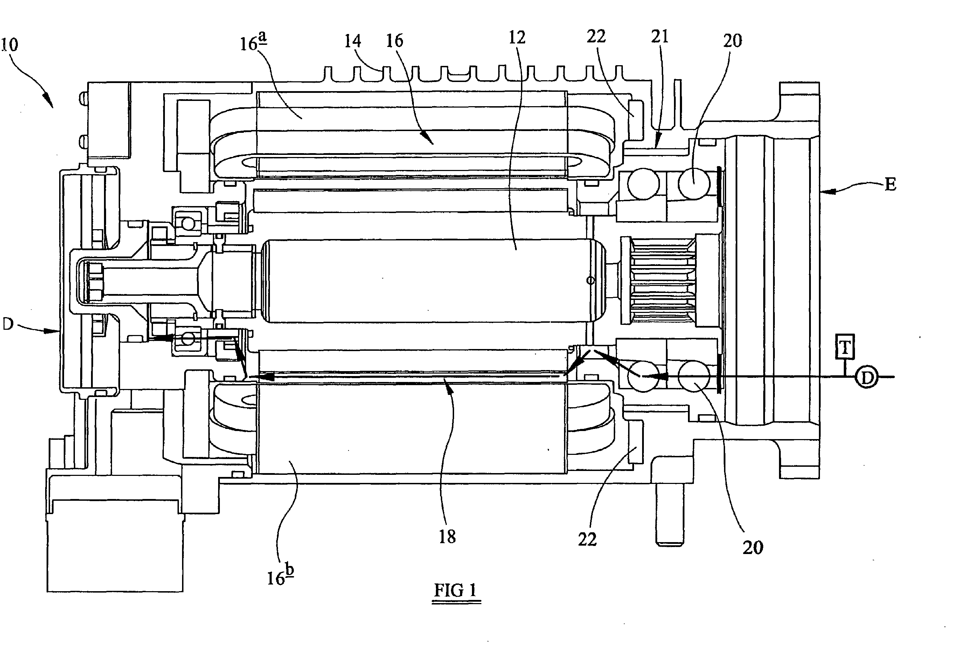

Referring first to Figure 1 of the drawings, a motor according to the invention is shown generally at 10. The motor 10 comprises a rotor 12, rotatably mounted within a casing 14 of the motor, and a stator 16 including a plurality of windings 16a and a magnetic core 16b. A sleeve, conveniently formed from stainless steel, is received coaxially within the assembly of core and windings to seal the windings against fluid ingress in use and to define the inner surface of the stator.

Within the housing 14 the rotor 12 is radially spaced from the inner surface of the sleeve of the stator such that a narrow annular air gap 18 exists between the rotor and the stator. The rotor 12 rotates within the housing 14 on bearings 20 which are mounted within a so-called bearing block 21.

In the illustrated embodiment, the motor is associated with an hydraulic pump, shown diagrammatically at P, which is connected to the motor at one end E thereof and driven by the rotor 12. The hydraulic pump may be arranged to control an hydraulic actuator by means of the application of hydraulic fluid thereto.

In order to provide a cooling effect on the rotor 12 and stator 16 of the motor and to lubricate the bearings 20 within the bearing block 21, the hydraulic pump is arranged to provide a source of hydraulic fluid which is applied to, and flows through, a fluid path, illustrated by the arrows in the drawing, defined within the motor.

Specifically, the fluid flows into the bearing block 21 from the pump to provide lubrication for the bearings 20 and then through the annular air gap 18 defined between the rotor 12 and the stator 16 of the motor. A drain hole (not shown) is provided in the casing 14 of the motor at a second end D thereof for recycling the fluid back to the hydraulic pump or to the hydraulic system to which the pump is connected. The sleeve lining the stator defines an isolator barrier preventing ingress of fluid into the stator windings 16a and moreover the windings are encapsulated.

As described above, at temperatures below approximately -40°C, the viscosity of the hydraulic fluid becomes high enough to affect the operation of the motor. In particular, the starting torque of the motor is insufficient to overcome the viscosity of the hydraulic fluid and, at temperatures below -40°C, it may become difficult or impossible to start the motor.

The present invention therefore provides heating means, which, in a preferred embodiment of the invention, is in the form of an annular heating element 22, thermally coupled to the body of the motor. The heating element preferably comprises an electric heater but may conveniently comprise any suitable heating apparatus.

The heating element 22 is disposed radially outwardly of the bearing block 21 but in close proximity thereto, being mounted to the region of the motor casing 14 immediately surrounding and supporting the bearing block 21 and in good thermal contact therewith. Where possible, the heating element may be mounted directly to the bearing block 21, in good thermal contact therewith. The heating element 22 is physically and/or electrically isolated from the hydraulic fluid flowing through the bearing block 21, in order to reduce or substantially eliminate the likelihood of fire.

Due to good thermal contact with the heating element 22, the main body of the motor, which is closely coupled to the pump, is heated. Thus, fluid within the pump also experiences a temperature rise, resulting in improved pump efficiency at low temperatures.

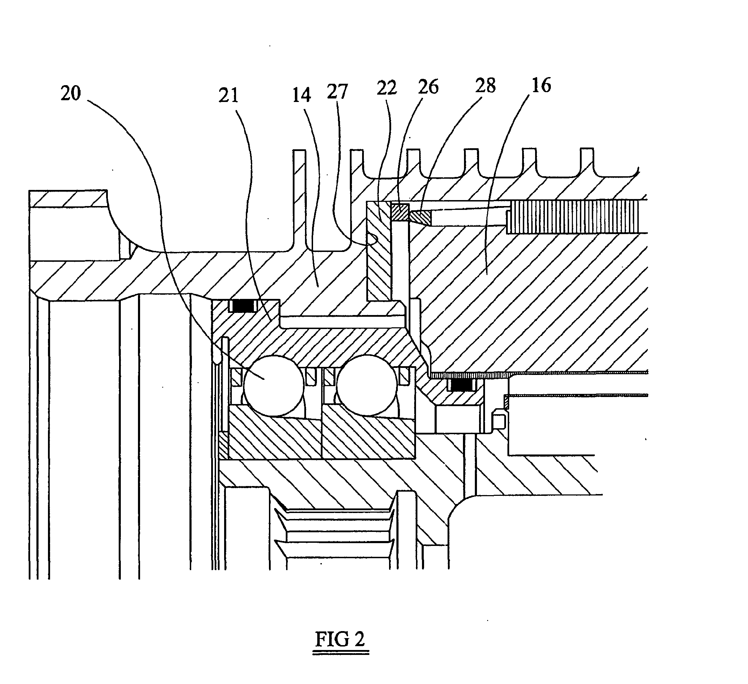

Figure 2 illustrates a mounting arrangement for the heating element 22 in which a spring washer 26 or equivalent spring biasing device urges the element 22 into close contact with the motor body surrounding the bearing block 21, to ensure good thermal transmission therebetween. By virtue of the view which is depicted in Figure 2 it will be noted that by comparison with Figure 1 the components in Figure 2 appear reversed in position. The spring washer 26 is trapped in a stressed condition between the element 22 and an aluminium support ring 28 embedded in the encapsulation of the winding 16 of the motor, and presses the element 22 firmly into an annular recess 27 in the motor casing 14 surrounding the bearing block 21.

The heating element 22 is arranged to raise the temperature of the hydraulic fluid by approximately 15°C, for example from -55°C to approximately -40°C. This relatively small increase in temperature is sufficient to reduce the viscosity of the hydraulic fluid to a level at which it does not affect the operation of the motor.

Owing to the relatively small rise in temperature required, it is envisaged that the heating element 22 may have a power rating of approximately 200 watts. The heating element 22 may be provided with a temperature sensing arrangement T conveniently a thermostatic switch, which switches on the heating element 22 at a temperature of between -40°C and -30° C. Heat from the heating element 22 is transmitted through the bearing block 21 and the bearings 20 to the hydraulic fluid so as to provide a good thermal contact therewith. The temperature sensing arrangement T is shown monitoring the temperature of the fluid issuing from the pump P but it is to be understood that the location of the temperature sensing arrangement T can be varied if desired. For example the temperature sensing arrangement T could be mounted on the stator sleeve to monitor the fluid temperature in the air gap 18 where significant drag is experienced when the viscosity of the fluid is high.

Since the hydraulic fluid is heated on entering the motor, only a relatively low power heating element is necessary and the arrangement avoids the need to heat all of the hydraulic fluid thereby increasing the efficiency of the apparatus.

It will be appreciated that the present invention provides a simple and effective solution to the problem of increased hydraulic fluid viscosity at very low temperatures. The heating element is simple and inexpensive to fit to existing motors and requires very little power.

## Claims

1. An electric motor arranged for passing therethrough a supply of fluid for lubricating and/or cooling said motor, the motor (10) being **characterised by** heating means (22) for heating the fluid when the fluid enters the motor.

2. An electric motor as claimed in claim 1 **characterised in that** the fluid flows through an annular gap (18) between a rotor (12) and a stator (16) of the motor.

3. An electric motor as claimed in claim 1 or claim 2 **characterised by** an isolator for isolating stator windings of said stator from the fluid.

4. An electric motor as claimed in any one of the preceding claims **characterised by** a temperature sensing arrangement (T) in association with the heating means (22).

5. An electric motor as claimed in claim 4 **characterised in that** the heating means is arranged, in use, to raise the temperature of the fluid above -50°C.

6. An electric motor as claimed in claim 5 **characterised in that** the heating means is arranged, in use, to raise the temperature of the fluid to a value no less than -40°C.

7. An electric motor as claimed in any one of the preceding claims **characterised in that** the heating means (22)is arranged such that it is not in contact with the fluid.

8. An electric motor as claimed in any one of the preceding claims **characterised in that** the heating means comprises an annular heating element (22).

9. An electric motor as claimed in any one of the preceding claims **characterised in that** the heating element (22) is mounted close to or adjacent to a region of the motor at which the fluid enters the motor

10. An electric motor as claimed in any one of the preceding claims **characterised in that** the heating element is spring urged into contact with the motor structure.

11. An electro-hydraulic actuator **characterised by** comprising a motor as claimed in any one of the preceding claims and an hydraulic pump, said fluid being hydraulic fluid supplied by said hydraulic pump.
